Europäisches Patentamt

European Patent Office

Office européen des brevets

(11) Numéro de publication: **0 397 549**
**A1**

(12) **DEMANDE DE BREVET EUROPEEN**

(21) Numéro de dépôt: **90401193.9**

(22) Date de dépôt: **03.05.90**

(51) Int. Cl.⁵: **G01N 5/00, E01C 19/10, G01G 19/32**

(30) Priorité: **12.05.89 FR 8906296**

(43) Date de publication de la demande:
**14.11.90 Bulletin 90/46**

(84) Etats contractants désignés:
**AT CH DE ES GB IT LI NL SE**

(71) Demandeur: **ERMONT. C.M.**
**Rue Jean-Pierre Timbaud**
**F-42420 Lorette(FR)**

(72) Inventeur: **Marconnet, Guy**
**La Champagnière, Saint Martin La Plaine**
**F-42800 Rive de Gier(FR)**

(74) Mandataire: **Bouget, Lucien et al**
**Cabinet Lavoix 2, Place d'Estienne d'Orves**
**F-75441 Paris Cédex 09(FR)**

(54) **Procédé et dispositif de mesure de la teneur en liant bitumineux de matériaux enrobés produits dans une installation d'enrobage.**

(57) L'installation d'enrobage comporte un dispositif de malaxage (1) dans lequel des agrégats (4) en circulation continue sont mélangés avec un liant bitumineux introduit en un point d'injection (7). On mesure le poids P d'une quantité de matériaux enrobés (8) définie, on mesure la quantité pondérale B de bitume mélangé aux agrégats (8) pour produire la quantité définie de poids P et on calcule le rapport B/(P - B) x 100 représentant le pourcentage pondéral de liant bitumineux. On détermine le temps de parcours T1 des matériaux entre le point d'injection (7) et l'entrée de la trémie de réception (12), on détermine le poids P par pesée directe de la trémie de chargement (11) à deux instants définis et on mesure le poids B de liant bitumineux mélangé aux agrégats (4) pendant le temps de constitution de la charge P, en tenant compte du temps de parcours T1 des matériaux (8).

**FIG.1**

EP 0 397 549 A1

L'invention concerne un procédé de mesure de la teneur en liant bitumineux de matériaux enrobés et en particulier d'enrobés pour revêtement routier.

Les matériaux enrobés tels les enrobés pour revêtement routier sont constitués par des agrégats tels que des cailloux revêtus de bitume et renfermant une certaine quantité de matière à fine granulométrie.

Ces matériaux enrobés sont généralement produits dans des centrales d'enrobage mobiles ou à poste fixe et transportés sur le chantier routier par des camions-bennes avant d'être répandus sur la route en cours de construction ou de réfection et compactés par des engins appropriés.

Il est nécessaire de contrôler la qualité des enrobés produits et transportés sur le chantier routier, de manière à garantir la qualité de la fourniture et à corriger immédiatement toute déviation par rapport aux normes requises.

En particulier, il est nécessaire de contrôler de manière pratiquement continue la teneur en liant bitumineux des enrobés transportés sur le chantier.

Les centrales d'enrobage comportent un dispositif de malaxage dans lequel les agrégats sont introduits et mélangés avec le liant bitumineux. De manière courante, ce dispositif de malaxage est constitué par un tambour sécheur et enrobeur réalisant à la fois le séchage et le chauffage des agrégats et des fines et le malaxage de ces matériaux avec du bitume liquide.

Le tambour-sécheur-enrobeur comporte une enveloppe cylindrique de grande longueur tournant autour de son axe et recevant par l'une de ses extrémités les agrégats froids et humides qui traversent le tambour, suivant toute sa longueur jusqu'à une seconde extrémité de sortie où les enrobés produits dans le tambour sont repris par un transporteur tel qu'un convoyeur à raclettes.

Le bitume liquide est introduit dans le tambour, par une lance d'injection en un point intermédiaire entre les extrémités du tambour.

Le débit de bitume liquide introduit par la lance est réglé en fonction du débit pondéral d'agrégats qui est mesuré sur un convoyeur peseur faisant partie de l'ensemble de manutention amenant les agrégats froids et humides à l'extrémité d'entrée du tambour. Le débit pondéral des agrégats est donc mesuré en un point qui peut être relativement éloigné du point d'introduction du bitume. Pour régler le débit d'alimentation de la lance d'injection de bitume, on tient compte du temps de parcours $T_0$ des agrégats entre le point de pesée et le point d'injection situé à l'intérieur du tambour.

Les matériaux enrobés bitumineux produits en continu dans le tambour et repris à la sortie du tambour par un convoyeur se déversent, à la sortie du convoyeur, dans une trémie anti-ségrégation comportant un dispositif d'ouverture et de fermeture.

Lorsque la trémie anti-ségrégation est fermée, le convoyeur assure son remplissage, la trémie anti-ségrégation étant ensuite placée en position d'ouverture, de manière à déverser son contenu dans une trémie de stockage.

Les camions-bennes de transport des enrobés viennent se placer successivement sous la trémie de stockage dont l'ouverture contrôlée assure le remplissage du camion en position de chargement sous la trémie.

La trémie anti-ségrégation peut être à ouverture cyclique, son contenu étant déversé à des périodes de temps régulières dans la trémie de stockage ou dans une trémie intermédiaire.

Dans un premier type d'installation, la trémie anti-ségrégation est placée au-dessus d'une trémie de stockage unique et déverse son contenu de manière réglée dans cette trémie de stockage.

Dans un second type d'installation, la trémie anti-ségrégation est placée au-dessus d'une trémie navette intermédiaire dans laquelle se déverse le contenu de la trémie anti-ségrégation avec une certaine périodicité. La trémie intermédiaire qui est montée mobile au-dessus d'une batterie de trémies de stockage assure ensuite le remplissage successif de ces trémies de stockage.

On connaît une méthode de contrôle de la teneur en liant bitumineux des enrobés produits dans les centrales d'enrobage qui est appliquée de manière courante dans le cas des centrales comportant un poste de malaxage en continu.

Cette méthode consiste à déterminer la teneur en bitume des enrobés constituant la charge de chacun des camions de transport dont on effectue le remplissage successif, à la sortie du poste d'enrobage.

La masse totale du camion contenant la charge d'enrobés est mesurée par un pont bascule sur lequel passe le camion. On obtient la charge nette en enrobés $Q$ du camion en retranchant de la masse mesurée la valeur de la tare du camion qui a été déterminée au moment du démarrage journalier du chantier.

On détermine d'autre part la quantité pondérale de bitume liquide $B$ qui a été déversée par la lance d'injection dans le dispositif de malaxage, pendant le temps nécessaire pour assurer la production de la masse $P$ d'enrobés bitumineux.

La teneur en liant $b$ (en pourcentage pondéral) est donnée par l'expression :
$$b = B/(P - B) \times 100.$$

La valeur $b$ de la teneur en liant obtenue est comparée à une valeur $b_0$ correspondant à la teneur en liant définie par les normes de fabrication.

Comme il a été indiqué plus haut, le débit pondéral de bitume injecté par la lance dans le dispositif de malaxage est déterminé à partir du débit pondéral des agrégats humides mesuré par une table de pesage, avant l'entrée de ces agrégats dans le tambour.

Un module de calcul permet de déterminer le débit pondéral de bitume à injecter à un instant donné, en fonction du débit mesuré des agrégats humides. Pour effectuer ce calcul, on introduit dans le module des valeurs de consignes correspondant à l'humidité des agrégats, la teneur voulue en liant $b_0$, la densité du liant et le temps de parcours $T_0$ des agrégats entre le point de pesée et le point d'introduction du bitume.

Une pompe à vitesse variable délivre le liant bitumineux en continu dans lance d'injection. Le débit réel instantané de cette pompe est comparé au débit calculé, de manière à annuler tout écart entre le débit réel et le débit calculé, en agissant sur la vitesse de la pompe, par l'intermédiaire d'un régulateur.

La quantité de liant introduite dans la lance d'injection est déterminée par un compteur qui émet des impulsions proportionnelles au nombre réel de li tres de bitume passant dans la pompe. On déduit de la valeur fournie par le compteur, la quantité pondérale b de bitume fournie pendant un temps de fabrication déterminé.

La méthode de contrôle de la teneur en liant de produits enrobés bitumineux fabriqués en continu décrite ci-dessus présente certains inconvénients se traduisant par un manque de précision dans certains cas et par des limitations dans ses possibilités d'application.

Tout d'abord, la charge nette en produits enrobés des camions est déterminée de manière approximative dans la mesure où la tare de chacun des camions est déterminée une seule fois par jour et estimée constante pendant le reste de la journée. En réalité, cette tare ne reste pas constante et il en résulte certaines erreurs dans la détermination de la charge nette des camions.

D'autre part, la quantité pondérale b de bitume délivrée par la pompe pendant un certain temps de fabrication correspond à la quantité pondérale d'agrégats passant sur la table de pesage du convoyeur peseur.

Pour effectuer le réglage de débit de la pompe, on prend généralement en compte un certain décalage dans le temps correspondant au temps de parcours $T_0$ des agrégats entre le point de pesage et le point d'introduction du bitume. Cependant, la quantité de bitume b est rapportée à la quantité correspondante d'agrégats des matériaux enrobés constituant la charge d'un camion, dans une phase décalée dans le temps, par rapport à l'injection du bitume. La méthode décrite ne prend pas en compte le temps de parcours des matériaux entre le point d'injection et la benne du camion.

Dans le cas où le débit du poste d'enrobage est constant, la méthode de mesure et de calcul de la teneur en liant utilisée n'entraîne pas d'erreur due au décalage dans le temps entre l'injection de bitume et le remplissage du camion. En revanche, lorsque l'installation d'enrobage est dans une phase d'accroissement ou de réduction de débit, il peut apparaître des erreurs importantes dues à la méthode de détermination utilisée.

En outre, lorsque le débit de l'installation n'est pas constant, le temps de fabrication de la charge nette Q d'un camion est déterminé avec une certaine approximation.

Enfin, la méthode de mesure suivant l'art antérieur qui a été décrite interdit pratiquement d'utiliser de manière rationnelle une trémie de stockage des enrobés. En effet, une telle trémie de stockage, dans la mesure où elle est susceptible de renfermer une quantité relativement importante d'enrobés bitumineux, augmente dans des proportions importantes le décalage dans le temps entre l'injection du bitume et le chargement des enrobés. La méthode de mesure de la teneur en liant des enrobés est alors totalement inopérante.

Pour mettre en oeuvre la méthode de mesure décrite, il est possible d'utiliser la trémie de stockage de manière qu'elle soit toujours vide à la fin du chargement d'un camion quelconque. Dans ce cas, la hauteur de chute des enrobés bitumineux dans la trémie de stockage est importante, ce qui entraîne un compactage et une ségrégation des enrobés dans la partie inférieure de la trémie de stockage.

Il est également possible d'effectuer le contrôle de la teneur en liant de manière périodique, sur certains camions seulement, dont le chargement est effectué directement. Dans ce cas, la fabrication du poste d'enrobage n'est pas contrôlée de manière suivie et il peut en résulter la fourniture d'enrobés défectueux.

Le but de l'invention est donc de proposer un procédé de mesure de la teneur en liant bitumineux de matériaux enrobés produits dans une installation d'enrobage comportant un dispositif de malaxage dans lequel des agrégats en circulation continue sont mélangés avec un liant bitumineux introduit en un point d'injection du dispositif et au moins une trémie de réception des matériaux bitumineux produits se déversant dans une trémie de chargement assurant le stockage des matériaux bitumineux avant leur chargement dans des moyens de transport tels que des camions, ce procédé consistant à mesurer le poids P d'une quantité de matériaux enrobés définie, à mesurer la quantité pondérale B de bitume mélangé aux agrégats pour produire la quantité définie de matériaux enrobés P et à calculer le rapport $B/(P - B) \times 100$ correspondant au pourcentage pondéral de liant dans les enrobés, ce procédé étant d'une grande précision, aussi bien dans le cas où l'installation d'enrobage fonctionne à débit constant que dans le cas où cette installation fonctionne à débit variable et pouvant être appliqué quel que soit le mode de stockage des enrobés avant leur chargement dans les camions.

Dans ce but,

- on détermine le temps de parcours T1 des matériaux entre le point d'injection du liant bitumineux et l'entrée de la trémie de réception,
- on détermine le poids P des matériaux enrobés introduits dans la trémie de chargement entre deux instants définis par rapport aux phases de remplissage et de vidange de la trémie de chargement, entre lesquels s'écoule une période de temps appelée temps de constitution de la charge, par pesée directe de la trémie de chargement,
- et on mesure la quantité pondérale de liant bitumineux injectée et mélangée aux agrégats, pendant le temps de constitution de la charge, en tenant compte du temps T1 de parcours des matériaux entre le point d'injection et l'entrée de la trémie de réception.

Afin de bien faire comprendre l'invention, on va maintenant décrire, à titre d'exemple non limitatif, en se référant aux figures jointes en annexe, la mise en oeuvre du procédé suivant l'invention, dans le cas de deux installations d'enrobage comportant des moyens de stockage différents.

La figure 1 est une vue schématique en élévation et en coupe d'une installation d'enrobage comportant une trémie unique de récupération et de stockage d'enrobés constituant la trémie de chargement.

La figure 2 est une vue en élévation et en coupe d'une installation d'enrobage comportant une batterie de trémies de stockage alimentées par une trémie intermédiaire mobile constituant la trémie de chargement.

La figure 3 est une représentation schématique d'un module de traitement et de calcul permettant de mettre en oeuvre le procédé suivant l'invention.

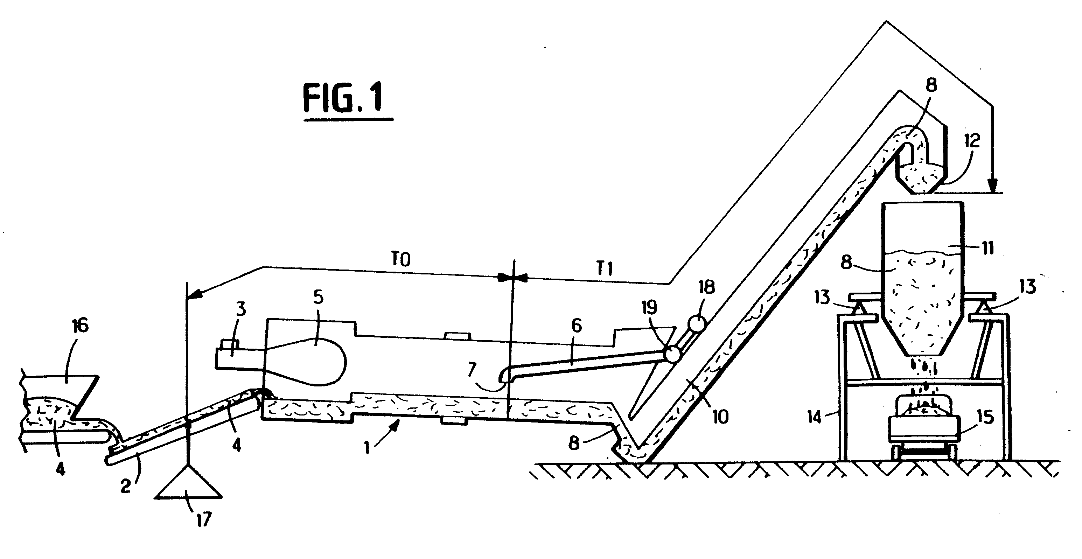

Sur la figure 1, on a représenté une installation d'enrobage comportant un tambour sécheur et enrobeur 1 alimenté en continu en agrégats froids et humides par un convoyeur peseur 2 à l'une de ses extrémités longitudinales.

Un brûleur 3 pénètre par la face du tambour correspondant à l'extrémité d'entrée des agrégats 4. La flamme 5 du brûleur se développe dans une première zone du tambour constituant une zone de combustion dans laquelle sont formés des gaz chauds qui circulent ensuite dans le tambour, suivant sa direction longitudinale et en direction de son extrémité opposée à l'extrémité d'introduction des agrégats.

L'enveloppe du tambour sécheur et enrobeur 1, de forme générale cylindrique, est montée rotative autour de son axe longitudinal qui est légèrement incliné par rapport au plan horizontal, l'extrémité d'entrée des agrégats étant à un niveau supérieur à l'extrémité opposée du tambour.

L'enveloppe du tambour est garnie intérieurement par des aubes assurant une certaine agitation et/ou un certain relevage des agrégats, pendant leur circulation dans le tambour.

Une lance d'injection de bitume 6 est introduite par l'extrémité du tambour opposée à l'extrémité d'entrée des agrégats 4. L'extrémité de la lance 6 par laquelle est effectuée l'injection de bitume débouche à l'intérieur du tambour en un point d'injection 7 intermédiaire entre les deux extrémités du tambour.

La zone du tambour située entre l'extrémité de la zone où se développe la flamme 5 et le point d'injection de bitume 7 constitue une zone de séchage et de chauffage des agrégats; la paroi intérieure du tambour est garnie dans cette zone d'aubes assurant le relevage et la retombée des agrégats dans toute la section du tambour, de manière que ces agrégats soient exposés aux gaz chauds provenant de la zone de combustion.

Dans la zone terminale du tambour située entre le point d'injection 7 du bitume et l'extrémité du tambour opposée à l'extrémité d'introduction des agrégats, l'enrobage des agrégats est assuré par malaxage de ces agrégats et du bitume liquide par des aubes solidaires de la paroi intérieure du tambour.

Les produits enrobés bitumineux 8 élaborés dans le tambour se déversent en continu, à la sortie du tambour, dans un convoyeur à raclettes 10 assurant le transport des matériaux enrobés jusqu'à un niveau supérieur au niveau de chargement d'une trémie de stockage 11. Les matériaux enrobés 8 se déversent à la sortie du convoyeur à raclettes 10, dans une trémie anti-ségrégation 12 placée au-dessus de l'ouverture de chargement de la trémie de stockage 11.

La trémie de stockage 11 repose sur la partie supérieure d'un portique 14, par l'intermédiaire de pesons 13 permettant de déterminer la masse totale de la trémie de stockage 11 contenant une certaine quantité d'enrobés bitumineux 8.

Les camions de transport 15 des matériaux enrobés élaborés par l'installation sont susceptibles de venir en position de chargement en-dessous de la trémie 11.

Le convoyeur peseur 2 est alimenté en continu en agrégats froids et humides par un ensemble 16 comportant des trémies de stockage d'agrégats et un ou plusieurs transporteurs d'alimentation du convoyeur 2.

Le convoyeur 2 comporte une table de pesage 17 dont la position définit la position du point de pesée, suivant la direction de déplacement des agrégats à travers l'installation d'enrobage. Il apparaît que le point de pesée 17 et le point d'injection de bitume 7 sont relativement éloignés l'un de l'autre, si bien qu'il est nécessaire de prendre en compte le temps de parcours T0 des agrégats 4 entre le point de pesée 17 et le point d'injection de bitume 7, pour régler le débit d'injection du liant bitumineux par la lance 6.

La lance 6 est reliée à une pompe 18 dont le débit réel est comparé à un débit de liant calculé à partir du débit pondéral d'agrégats froids et humides mesurés au point de pesée 17.

Le débit de liant bitumineux calculé qui est comparé au débit réel de la pompe 18 tient compte d'un décalage dans le temps égal à T0, les agrégats 4 dont le débit est mesuré au point 17 parvenant au point d'injection 7 en un temps égal à T0.

Un compteur totalisateur 19 permet de déterminer le nombre de litres de liant bitumineux introduit par la pompe 18 dans la lance d'injection 6.

La trémie anti-ségrégation 12 dans laquelle les enrobés bitumineux 8 se déversent en continu avec une faible hauteur de chute comporte un dispositif d'ouverture et de fermeture qui peut être actionné pour assurer la vidange de la trémie anti-ségrégation 12 dans la trémie de stockage 11 ou, au contraire, pour assurer le remplissage de la trémie anti-ségrégation 12.

L'ouverture et la fermeture de la trémie anti-ségrégation 12 peuvent être commandées de manière cyclique.

La trémie de stockage 11 comporte également un dispositif d'ouverture et de fermeture permettant de réaliser le remplissage des camions de transport 15 se présentant sous la trémie de stockage 11.

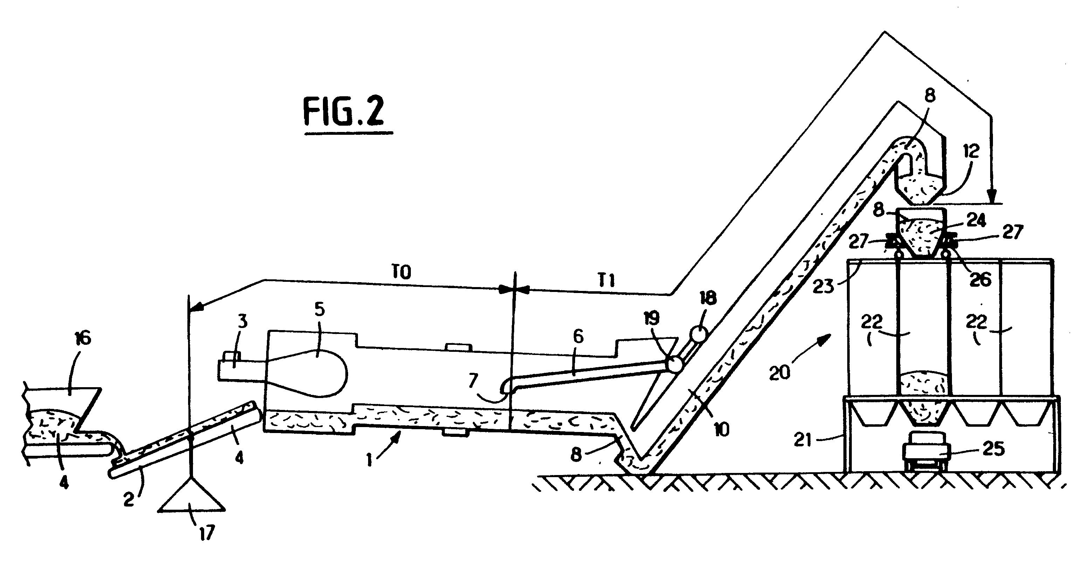

L'installation d'enrobage représentée sur la figure 2 est similaire à l'installation représentée sur la figure 1, les éléments correspondants sur les figures 1 et 2 portant les mêmes repères.

Cependant, l'installation représentée sur la figure 2 comporte, au lieu d'une trémie de stockage unique 11 , une batterie de trémies de stockage 20 fixées sur un portique 21 sous lequel les camions de transport 25 des matériaux enrobés viennent se présenter en position de chargement, en-dessous des extrémités inférieures de sortie des trémies de stockage 22 de la batterie 20.

Les trémies de stockage 22 de la batterie 20 comportent des extrémités supérieures situées sensiblement à un même niveau et portant un chemin de roulement 23 sur lequel une trémie intermédiaire mobile 24 est susceptible de se déplacer.

La trémie mobile 24 est une trémie navette qui peut se déplacer entre une position de chargement située en-dessous de l'extrémité de sortie de la trémie anti-ségrégation 12 et une position à la verticale et au-dessus de l'ouverture de chargement supérieure d'une trémie de stockage 22 quelconque.

La trémie 24 est portée par un chariot 26 mobile sur le chemin de roulement 23, par l'intermédiaire de pesons 27 qui permettent de déterminer la masse totale de la trémie 24 contenant une certaine quantité d'enrobés bitumineux 8.

Le remplissage de la trémie navette 24 est réalisé dans la première position de cette trémie à la verticale de la trémie anti-ségrégation 12 dont l'ouverture cyclique permet la vidange de la charge d'enrobés bitumineux qu'elle contient à l'intérieur de la trémie navette 24. Le remplissage de la trémie navette 24 est assuré au cours d'un ou plusieurs cycles d'ouverture successifs de la trémie 12.

La trémie navette 24 est ensuite déplacée grâce au chariot 26 à la verticale d'une trémie 22 dont on assure le remplissage par vidange de la trémie 24. La trémie navette 24 est ensuite replacée en position de chargement à la verticale de la trémie 12.

Dans le cas de l'installation représentée sur la figure 1 aussi bien que dans le cas de l'installation représentée sur la figure 2, le point d'injection du bitume 7 se trouve dans une position sensiblement éloignée de la trémie anti-ségrégation 12 constituant la trémie de réception par laquelle est effectué le remplissage de la trémie de stockage 11 ou de la trémie navette 24 constituant les trémies de chargement des agrégats bitumineux.

Pour la mise en oeuvre du procédé de mesure suivant l'invention, on détermine de la manière la plus précise possible le temps T1 séparant le moment où le bitume liquide est injecté dans les agrégats 4 et le moment où les produits enrobés bitumineux élaborés à partir de ces agrégats sont déversés dans la trémie anti-ségrégation 12. Ce temps T1 correspond a la somme du temps de parcours des matériaux en cours d'enrobage, suivant la longueur de la zone de malaxage du tambour 1 et du temps de transfert des enrobés bitumineux 8 par le convoyeur à raclettes 10 entre la sortie du tambour et la trémie anti-ségrégation.

Dans le cas de l'installation représentée sur la figure 1, la trémie de stockage 11 reçoit une charge d'enrobés bitumineux déversés de manière cyclique par la trémie anti-ségrégation 12. Les enrobés parviennent dans la trémie 12 avec un décalage dans le temps égal à T1, par rapport à l'injection de bitume au point 7 sur les agrégats à partir desquels on constitue la charge de la trémie 12.

Le dispositif d'ouverture de la trémie de stockage 11 est actionné au moment où un camion de chargement 15 se présente sous cette trémie, de manière à déverser une quantité déterminée d'enrobés dans la benne du camion correspondant à sa charge nette.

La trémie de stockage 11 reçoit donc à des intervalles de temps déterminés la charge fournie par la trémie anti-ségrégation 12 et réalise le déversement, à des instants déterminés par la présence d'un camion de transport, d'une charge dans la benne de ce camion.

La quantité de matériaux enrobés 8 contenue par la trémie de stockage 11 est donc essentiellement variable au cours du temps.

Les pesons 13 permettent de déterminer à chaque instant la masse totale de la trémie de stockage 11 renfermant une certaine quantité de matériaux enrobés 8.

Pour la mise en oeuvre du procédé suivant l'invention, on enregistre la valeur fournie par les pesons 13, à deux instants définis, au cours d'un cycle correspondant au chargement des camions.

On effectue une première mesure correspondant au poids P0 des matériaux enrobés dans la trémie de stockage 11 après la première vidange de la trémie anti-ségrégation 12 qui suit le chargement d'un camion 15.

On effectue ensuite la mesure du poids P1 des matériaux enrobés dans la trémie de chargement 11, après la dernière vidange de la trémie anti-ségrégation 12 qui précède le remplissage du camion suivant.

Le poids P de matériaux enrobés sur lequel porte la mesure de teneur en liant correspondant à la différente P1 - P0.

Ce poids P correspond à un nombre entier d'ouvertures de la trémie anti-ségrégation 12.

Le temps nécessaire à la constitution de la charge de matériaux enrobés P dans la trémie de stockage correspond au nombre d'ouvertures de la trémie anti-ségrégation multiplié par la périodicité de l'ouverture de cette trémie.

La production des enrobés étant réalisée en continu, ce temps correspond également au temps pendant lequel le bitume liquide a été injecté sur des agrégats pour constituer la charge de poids P.

Cependant, l'injection de bitume au point d'injection 7, à l'intérieur du tambour, précède d'un temps T1 l'introduction des matériaux enrobés dans la trémie anti-ségrégation 12.

Le poids B de bitume nécessaire pour constituer la charge de matériaux enrobés de poids P peut être déterminé à partir du compteur totalisateur 19 sur lequel on effectue des relevés à deux instants séparés par la durée de constitution de la charge de matériaux enrobés, ces deux instants étant décalés dans le temps d'une valeur T1 par rapport aux instants où sont effectuées les mesures de poids P0 et P1 respectivement, par l'intermédiaire des pesons 13.

Si la mesure du poids P0 est effectuée à l'instant t0 et la mesure du poids P1 à l'instant t1, la quantité de bitume B correspond à la quantité de bitume fournie par la pompe 18 et mesurée par le compteur volumétrique 19 entre les instants t0 - T1 et t1 - T1.

D'autre part, dans les conditions habituelles d'exploitation d'un poste d'enrobage, le procédé tel que décrit ci-dessus permet de contrôler environ les deux-tiers de la charge de chaque camion.

Dans le cas de l'installation représentée sur la figure 2, pour la mise en oeuvre du procédé de mesure suivant l'invention, on mesure le poids P de matériaux enrobés 8 constituant la charge de la trémie navette 24, après son remplissage et avant sa vidange dans une trémie de stockage 22. Cette mesure est effectuée grâce aux pesons 27 et correspond à la charge d'une ou plusieurs trémies anti-ségrégation 12, suivant la capacité relative de la trémie anti-ségrégation et de la trémie navette.

Le temps de constitution de la charge de la trémie navette 24 correspond donc au temps séparant l'ouverture et la fermeture de la trémie anti-ségrégation 12 ou un multiple entier de ce temps.

On détermine, comme précédemment, la quantité pondérale B de bitume contenu dans les matériaux enrobés 8 remplissant la trémie navette 24, à partir du compteur totalisateur 19 sur lequel on effectue des relevés à deux instants décalés dans le temps d'une valeur T1 par rapport à l'ouverture et à la fermeture de la trémie anti-ségrégation 12, pour le remplissage de la trémie navette 24.

Les mesures de poids en utilisant les pesons 27 sont effectuées juste avant le remplissage de la trémie 24 c'est-à-dire juste avant l'ouverture de la trémie anti-ségrégation 12 et juste après le remplissage de la trémie 24, c'est-à-dire à la fermeture de la trémie anti-ségrégation 12.

Le procédé suivant l'invention appliqué dans le cas d'une installation telle que représentée sur la figure 2 comportant une trémie navette permet de contrôler 100 % de la fabrication d'enrobés, dans la mesure où les relevés sont effectués sur chacune des charges de la trémie navette 24.

Dans les deux cas envisagés, c'est-à-dire dans le cas où le procédé suivant l'invention est appliqué à l'installation représentée sur la figure 1 et dans le cas où ce procédé est appliqué à l'installation représentée sur la figure 2, on détermine le poids P d'une charge de matériaux enrobés par pesée directe d'une trémie de chargement et la quantité pondérale correspondante B de bitume déversée sur les agrégats pour constituer la charge d'enrobés de poids P, en tenant compte du décalage dans le temps T1 entre l'injection du bitume au point 7 et le déversement des enrobés élaborés, dans la trémie de réception.

Dans les deux cas, on peut ainsi calculer la teneur en liant b des matériaux enrobés (en pourcentage pondéral) par la formule :
b = B/(P - B) x 100.

Dans les deux cas, le procédé de mesure est totalement indépendant de la tare des camions, la pesée de la charge d'enrobés étant réalisée par pesage différentiel dans la trémie de chargement.

Le procédé de mesure reste valable dans le cas d'un fonctionnement de l'installation à débit variable, c'est-à-dire pendant des phases d'accroissement ou de diminution du débit ; en effet, le temps de parcours T1 des matériaux entre le point d'injection et la trémie de réception est pris en compte pour la mesure de la quantité de bitume contenue dans les matériaux enrobés.

Le procédé de mesure suivant l'invention permet également d'utiliser des trémies de stockage des enrobés et de contrôler des quantités significatives d'enrobés en cours de production, ces quantités pouvant être comprises entre deux-tiers et trois-tiers de la quantité totale d'enrobés élaborés.

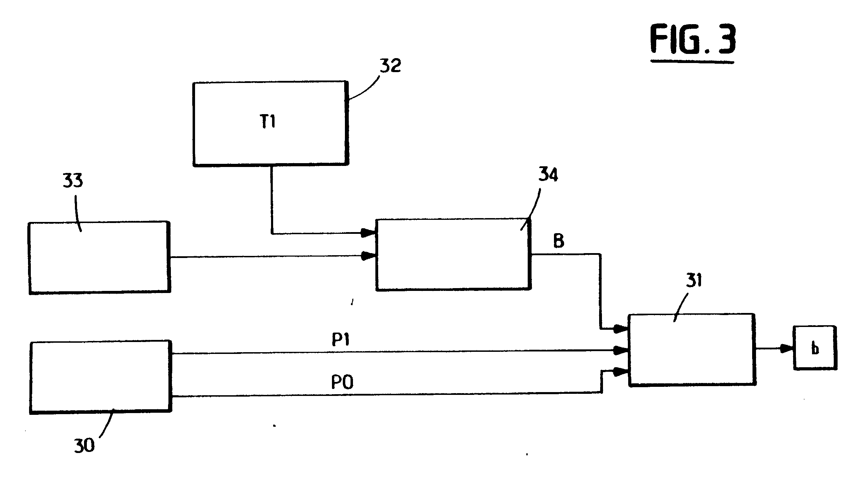

Sur la figure 3, on a représenté de manière schématique un ensemble de traitement et de calcul permettant de déterminer la teneur en bitume b de matériaux enrobés bitumineux produits dans une centrale d'enrobage à fonctionnement continu.

L'ensemble de traitement et de calcul comporte un premier module 30 relié aux pesons 13 oU 27 et commandé de manière à transmettre à un module de calcul 31 un signal représentatif de la mesure effectuée par les pesons à deux instants t0 et t1 déterminés en fonction du cycle de remplissage et de vidage de la trémie de chargement 11 ou 24.

Le module 30 fournit successivement au module de calcul 31 un signal représentatif d'un poids P0 et un signal représentatif d'un poids P1 tel que définis ci-dessus.

L'ensemble de traitement et de calcul comporte également un registre à décalage 32 recevant comme valeur de décalage le temps T1 correspondant au décalage entre l'injection de bitume et le déversement des matériaux enrobés dans la trémie de réception.

Un module 33 relié au compteur totalisateur 19 détermine la quantité pondérale totale de bitume injectée par la lance 6 au point d'injection 7.

Le module 33 fournit un signal représentatif des quantités pondérales de bitume injectées à un module 34 qui est commandé par le registre à décalage 32 pour fournir, en sortie, au calculateur 31, un signal représentatif de la quantité de bitume B introduit dans la charge d'enrobés de poids P égal P1 - P0.

Le calculateur 31 fournit en sortie la valeur du pourcentage pondéral b de bitume dans les matériaux enrobés. Cette valeur peut être affichée ou enregistrée, de manière à contrôler en continu le fonctionnement du poste d'enrobage.

L'invention ne se limite pas aux modes de réalisation qui ont été décrits.

C'est ainsi qu'on peut appliquer le procédé suivant l'invention, dans le cas d'installations comportant des trémies de chargement différentes d'une trémie navette ou d'une trémie de stockage, dans laquelle est effectuée la pesée directe de la charge de matériaux enrobés.

On peut utiliser, pour déterminer la quantité de bitume B, tout type de compteur volumétrique ou tout autre dispositif de mesure permettant d'obtenir la quantité pondérale de bitume injectée dans l'installation pendant une période déterminée.

L'invention s'applique à tout poste d'enrobage continu comportant une trémie de réception des matériaux enrobés produits se déversant dans une trémie de chargement.

## Revendications

1. - Procédé de mesure de la teneur en liant bitumineux de matériaux enrobés produits dans une installation d'enrobage comportant un dispositif de malaxage (1) dans lequel des agrégats (4) en circulation continue sont mélangés avec un liant bitumineux introduit en un point d'injection (7) du dispositif et au moins une trémie de réception (12) des matériaux bitumineux produits (8) se déversant dans une trémie de chargement (11 , 24) assurant le stockage des matériaux bitumineux avant leur chargement dans des moyens de transport (15, 25) tels que des camions, ce procédé consistant à mesurer le poids (P) d'une quantité de matériaux enrobés (8) définie, à mesurer la quantité pondérale (B) de bitume mélangé aux agrégats (4) pour produire la quantité définie de matériaux enrobés (8) et à calculer le rapport B/(P - B) x 100 correspondant au pourcentage pondéral du liant dans les matériaux enrobés (8) , caractérisé par le fait :
- qu'on détermine le temps de parcours T1 des matériaux (8) entre le point d'injection (7) du liant bitumineux et l'entrée de la trémie de réception (12),
- qu'on détermine le poids P des matériaux enrobés (8) introduits dans la trémie de chargement (11 , 24) entre deux instants définis par rapport aux phases de remplissage et de vidage de la trémie de chargement (11, 24) , entre lesquels s'écoule une période de temps appelée temps de constitution de la charge, par pesée directe de la trémie de chargement (11 , 24),
- et qu'on mesure la quantité pondérale de liant bitumineux B injectée et mélangée aux agrégats (4), pendant le temps de constitution de la charge, en tenant compte du temps T1 de parcours des matériaux (8) entre le point d'injection de bitume (7) et l'entrée de la trémie de réception (12).

2.- Procédé suivant la revendication 1, dans le cas où la trémie de chargement est une trémie de stockage fixe (11) dans laquelle se déverse une trémie anti-ségrégation (12) à ouverture cyclique, caractérisé par le fait qu'on détermine le poids P de matériaux enrobés (8) par pesée de la trémie de chargement (11), d'une part après la première vidange de la trémie anti-ségrégation (12) qui suit le chargement d'un camion (15) et d'autre part, après la dernière vidange de la trémie anti-ségrégation (12) qui précède le remplissage du camion (15) suivant et par différence entre les deux pesées obtenues.

3.- Procédé de mesure suivant la revendication 1, dans le cas où la trémie de chargement est une trémie navette (24) mobile entre un point de remplissage par une trémie anti-ségrégation (12) à ouverture cyclique recevant les matériaux enrobés (8) produits dans l'installation d'enrobage et une position de vidange au-dessus d'une trémie de stockage (22) quelconque, caractérisé par le fait qu'on détermine le poids P de matériaux enrobés (8) introduits dans la trémie de chargement (24), par pesée de la trémie (24), d'une part avant son remplissage par la trémie anti-ségrégation (12) et d'autre part, après son remplissage et avant sa vidange dans une trémie de stockage (22) et par calcul de la différence entre les valeurs obtenues lors des deux pesées effectuées.

4.- Procédé de mesure suivant l'une quelconque des revendications 2 et 3, caractérisé par le fait que le temps de constitution de la charge correspond à un multiple entier du cycle d'ouverture et de fermeture de la trémie anti-ségrégation (12).

5.- Procédé de mesure suivant l'une quelconque des revendications 1 à 4, caractérisé par le fait que la quantité pondérale de liant bitumineux B est déterminée à partir d'un compteur totalisateur de la quantité de bitume injectée dans le dispositif de malaxage (1), en tenant compte du temps de parcours T1 des matériaux entre le point d'injection (7) du bitume et l'entrée de la trémie de réception (12).

6.- Dispositif de mesure de la teneur b en liant bitumineux de matériaux enrobés produits dans une installation d'enrobage comportant un dispositif de malaxage (1) dans lequel des agrégats (4) en circulation continue sont mélangés avec un liant bitumineux introduit en un point d'injection (7) du dispositif et au moins une trémie de réception (12) des matériaux bitumineux produits (8) se déversant dans une trémie de chargement (11 , 24) assurant le stockage des matériaux bitumineux avant leur chargement dans des moyens de transport tels que des camions (15, 25), caractérisé par le fait qu'il comporte :

- au moins un capteur de mesure (13, 27) du poids de la trémie de chargement (11 , 24),

- un premier module électronique (30) de recueil du signal fourni par le capteur (13, 27) à deux instants déterminés par rapport aux phases de remplissage et de vidage de la trémie de chargement (11 , 24),

- un second module électronique (33) de recueil d'un signal représentatif de la quantité de bitume (B) introduit dans les matériaux enrobés (8),

- un registre à décalage (32),

- un troisième module électronique (34) recevant le signal de sortie du second module (33) et commandé par le registre à décalage (32),

- et un calculateur (31) recevant les signaux provenant du premier module (30) représentatif du poids de la trémie de chargement (11 , 24) à deux instants défi nis et le signal en sortie du troisième du module électronique (34) représentatif de la quantité pondérale de bitume B introduit dans les matériaux enrobés (8) susceptible de fournir en sortie une valeur $b = B/(P - B) \times 100$ représentative du pourcentage pondéral de liant bitumineux dans les enrobés (8), la quantité P étant déterminée par différence des signaux fournis au calculateur (31) par le premier module électronique de recueil (30).

**FIG.1**

# FIG.2

EP 0 397 549 A1

FIG.3

<table>
<tr><td colspan="3">Office européen<br>des brevets</td><td><b>RAPPORT DE RECHERCHE EUROPEENNE</b></td><td>Numero de la demande</td></tr>
</table>

EP 90 40 1193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 706 893  (J.D. BROCK)<br>* Fig.; colonne 5, lignes 34-54; colonne 6, lignes 3-32,50-60 *<br>--- | 1,6 | G 01 N  5/00<br>E 01 C  19/10<br>G 01 G  19/32 |
| A | GB-A-  880 481  (R. MERTENS)<br>* Fig.; page 2, lignes 73-112; page 3, lignes 16-54 *<br>--- | 1,6 | |
| A | FR-A-2 140 322  (COMPAGNIE D'ETUDES ET DE REALISATIONS DE CYBERNETIQUE INDUSTRIELLE ET COMPAGNIE FRANCAISE BLAW-KNOX)<br>* Figure 1; page 2, ligne 21 - page 3, ligne 13 *<br>--- | 1,6 | |
| A | WO-A-8 607 630  (MICROSPAN PROCESS CONTROLS LTD)<br>* Résumé; fig.; page 2, lignes 21-27 *<br>--- | 1 | |
| A | EP-A-0 203 856  (ERMONT S.A.)<br>----- | | |

**DOMAINES TECHNIQUES RECHERCHES (Int. Cl.5)**

G 01 N
E 01 C
G 01 G

Le présent rapport a été établi pour toutes les revendications

| Lieu de la recherche | Date d'achèvement de la recherche | Examinateur |
|---|---|---|
| LA HAYE | 14-08-1990 | HOCQUET A.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)